Europäisches Patentamt

European Patent Office

Office européen des brevets

(11) Publication number: **0 155 783**
A1

# EUROPEAN PATENT APPLICATION

(21) Application number: 85301344.9

(22) Date of filing: 27.02.85

(51) Int. Cl.⁴: **A 01 N 31/08**

(30) Priority: 29.02.84 GB 8405290

(43) Date of publication of application:
25.09.85 Bulletin 85/39

(84) Designated Contracting States:
AT BE CH DE FR GB IT LI LU NL SE

(71) Applicant: COALITE GROUP PLC
Buttermilk Lane
Bolsover nr.Chesterfield Derbyshire S44 6AB(GB)

(72) Inventor: Everest-Todd, Selwyn
Willow House Thorpe-le-Street
Everingham North Humberside(GB)

(74) Representative: Seaborn, George Stephen et al,
c/o Edward Evans & Co. Chancery House 53-64 Chancery
Lane
London WC2A 1SD(GB)

(54) Foliage desiccant or defoliant.

(57) A contact foliage dessicant or defoliant, capable of effecting destruction of green tissue, comprises or includes a biocide. A method of defoliating plants or crops comprises applying to said plants or crops, e.g. by spraying, a contact foliage desiccant or defoliant capable of effecting destruction of green tissue and comprising a biocide.

The desiccant or defoliant in particular comprises 2-chloro-6-methyl-4-benzylphenol, o-cresol or other compound which can be formed in the pre-runnings from distilling the reaction mixture produced by chlorinating o-cresol, optionally with surfuryl chloride.

EP 0 155 783 A1

- 1 -

## FOLIAGE DESICCANT OR DEFOLIANT

This invention relates to foliage desiccants or defoliants and has particular application to foliage desiccants or defoliants for use on plants to assist harvesting.

Foliage desiccants or defoliants are well known in the art and great publicity has been given to their uses in warfare. In such use the object is to effect destruction of the green tissue without concern for the plant and thus most such desiccants or defoliants as are commercially available are so severe that the plant will die and, where the plant is grown for a crop, the crop is so contaminated or burned by the desiccant or defoliant as to be useless.

The present invention seeks to provide a foliage desiccant or defoliant which can be applied to plants having green and non-green tissue to effectively destroy the green tissue without killing off the non-green tissue of the plant. The invention also seeks to provide a method of defoliating plants or harvested crops.

The invention further seeks to provide a foliage desiccant or defoliant which can be applied to certain plants grown for crops to assist havesting of the crop.

According to the present invention there is provided a contact foliage desiccant or defoliant, capable of effecting destruction of green tissue, and which desiccant or defoliant comprises or includes a biocide.

The invention also provides a method of defoliating plants or crops (whether prior to or after harvesting) which comprises applying to said plants or crops, e.g. by spraying, a contact foliage desiccant or defoliant capable of effecting destruction of green tissue, which desiccant or defoliant also comprises or includes a biocide.

The desiccant or defoliant may be the biocide alone or may be a composition comprising the biocide, as an active ingredient, together with a suitable carrier. The same compound may be active in both desiccant or defoliant and as biocide.

Preferably the contact desiccant or defoliant comprises 2-chloro-6-methyl-4-benzylphenol or o-cresol.

One aspect of the invention comprises a foliage desiccant or defoliant composition comprising a contact foliage desiccant or defoliant together with a biocide.

British patent specification no. 1509520 discloses the use of 4-chloro-2-methylphenol as an intermediate for the synthesis of plant protection agents and describes how, from the pre-runnings in the manufacture of that compound, the compound 2-chloro-6-methyl-4-benzylphenol can be extracted. The said specification no. 1509520 identifies the compound 2-chloro-6-methyl-4-benzylphenol as being useful but the widest disclosed use is restricted to its good action against bacteria and fungi which are pathogenic to humans and animals. There is no disclosure of a use of the compound for plant life but from the advantages to humans and animals the reader may expect some beneficial results with plant life.

Contrary to this expectation it has been found that the compound 2-chloro-6-methyl-4-benzylphenol is an effective contact defoliant or desiccant. Further it has been found that when applied to a plant or harvested crop to defoliate the plant or crop the compound retains biocidal activity.

Other compounds in the pre-runnings from the process described in British patent 1509520 may also be used in the present invention as the defoliant or foliage desiccant.

The result of these two effects on a plant or crop is that the compound effectively destroys the soft green tissue of the plant or crop and, if the compound contacts non-green tissue, it will initially burn the tissue but the biocidal effect sterilizes the wound.

Thus when the compound is applied to the plant or crop e.g. as a spray, the non-green tissue may be subjected to spot burns but, being almost immediately sterilized, the spot burns are neutralised and said non-green tissue is not destroyed by the compound.

This effect is of particular advantage in those areas of desiccation where the leaf tissue should be destroyed in order to prevent the entry of pathogens into the plant.

When the compound is applied to plants bearing a non-edible crop, such as cotton, the compound has little effect on the crop and can greatly assist in harvesting the crop.

When the compound is applied to a food plant or crop where the edible part of the crop is protected by a natural shield, such as a case or shell, the compound will affect only the shell or case and the crop will be unharmed.

When the compound is applied to a food plant or crop which is exposed, or the natural protection is restricted to a skin or rind, as is the case with large fruit such as apples, pears and the citrus fruits, the skin of the fruit may be so scarred by the compound as to be unattractive but such fruits are still suitable for processing, particularly where the fruit is peeled before being processed.

The compound and method proposed by the invention are useful on all plants and crops having green tissue and not just on tree, bush and shrub crops. By way of example, the compound offers advantage as a desiccant of green tissue to destroy potato foliage and green tissue in grain crops to terminate metabolic function of the plants. The invention is especially useful in connection with crops such as cotton, beans and other leguminous crops, sugar cane, potatoes, tobacco and coffee.

The present invention can be effective on certain stored crops, such as potatoes, to prevent premature germination, by killing off the soft green tissue of sprouts, and is believed that the compound is beneficial in such uses where its biocidal activity can combat many diseases to which the stored crop may be susceptible.

Whilst the dosage rate for applying the compound may vary widely from trees to ground crops the compound is beneficial to agronomic practise within the dosage rate of 1.0 to 20.0 kg. per hectare of suitable formulated active principal.

The invention will now be described by way of the following Examples.

EXAMPLE I.

9.0 gm 2-chloro-6-methyl-4-benzylphenol and 1.0 gm caster oil soap were mixed together using a standard laboratory stirrer and the whole diluted with water to a total volume of 900 ml. After agitation the resultant emulsion was applied to 45 square metres of a crop of potatoes by Knapsack sprayer. At the time of application the foliar tissue was vital but mature and the progeny tubers in a marketing condition.

Twenty four hours after application the crop foliage became chlorotic thereby terminating metabolic function.

EXAMPLE II.

A formulation of 2-chloro-6-methyl-4-benzylphenol made up as in Example I was applied to 90 square metres of a mature crop of barley.

This application effectively desiccated green tissue within the crop without damage to the grain.

EXAMPLE III

To a mixing vessel were added:

     100 gm 2-chloro-6-methyl-4-benzylphenol
     400 gm Polyethyleneglycol
      10 gm Caster oil soap and agitated with a
            laboratory stirrer.

The resulting mixture was applied to various crops and the results are set out below.

## TEST RESULTS

| Test Plant | Concentration active ingred. | Volume applied litres/hectare | % Defoliation after 72 hours |
|---|---|---|---|
| Potato | 0.5% | 200 litres | 49 |
| " | 1.0% | 200 litres | 98 |
| " | 0.5% | 100 litres | 25 |
| " | 1.0% | 100 litres | 64 |
| Barley | 0.5% | 200 litres | 78 |
| " | 1.0% | 200 litres | 93 |
| Cotton | 1.0% | 200 litres | 47 |
| " | 1.0% | 400 litres | 95 |
| " | 2.0% | 200 litres | 81 |
| " | 2.0% | 400 litres | 99 |

0155783

- 7 -

<u>CLAIMS</u>

1. A contact foliage desiccant or defoliant, capable of effecting destruction of green tissue, and which comprises a biocide.

2. A desiccant or defoliant according to claim 1, comprising 2-chloro-6-methyl-4-benzylphenol or o-cresol.

3. A desiccant or defoliant according to claim 1, comprising a compound which can be found in the pre-runnings from the process described in British patent 1509520.

4. A method of defoliating plants or crops comprising applying to said plants or crops a desiccant or defoliant according to any of claims 1 to 3.

5. A method according to claim 4, wherein the plant or crop has green tissue.

6. A method according to claim 4 or 5, wherein the plant or crop is non-edible or is a non-food plant or crop.

7. A method according to claim 5, wherein the plant or crop is cotton or tobacco.

8. A method according to claim 4 or 5, wherein the plant or crop is a food plant or crop.

9. A method according to claim 8, wherein edible parts of the plant or crop are protected by a natural shield.

10. A method according to claim 8, wherein edible parts of the plant or crop are exposed or protected only by a skin or rind.

11. A method according to claim 8, wherein the desiccant or defoliant is applied to potato foliage to effect destruction thereof.

12. A method according to claim 8, wherein the desiccant or defoliant is applied to a grain crop to terminate metabolic function of the plants.

13. A method according to any of claims 4 to 6 and 8 to 10, wherein the plant or crop is beans or other leguminous crop, sugar cane, potatoes or coffee.

14. A method according to any of claims 4 to 13, wherein the desiccant or defoliant is applied at a dosage rate of 1.0 to 20.00 kg. of active principal per hectare.

15. A method according to any of claims 4 to 10, wherein the crop is a stored crop to which the desiccant or defoliant is applied to prevent or inhibit premature germination and/or to combat disease.

0155783

European Patent
Office

EUROPEAN SEARCH REPORT

, Application number

EP 85 30 1344

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | EP-A-0 068 442 (VEB)<br><br>* Page 1, lines 1-32; page 4, lines 1-9; page 6, line 34 - page 7, line 12; tables 1,6,7; claims * | 1-13, 15 | A 01 N 31/08 |
| X | FR-A-1 542 432 (KYOWA HAKKO KOGYO CO. LTD.)<br>* Page 1, left-hand column, line 12 - right-hand column, line 32; page 2, left-hand column, lines 13-34; abstract * | 1-5,8-15 | |
| D,A | GB-A-1 509 520 (VEB JENAPHARM)<br>* Page 1, lines 14-29; page 3, line 63 - page 4, line 9; page 15, lines 11-35; claims * | 1-3 | |
| A | DE-A-2 815 237 (BAYER)<br>* Claims; page 5, lines 11,14,17; page 7, line 6 - page 8, line 21; page 11, lines 20-29; examples A-D; example 4 * | 1-15 | TECHNICAL FIELDS SEARCHED (Int. Cl 4)<br><br>A 01 N |

The present search report has been drawn up for all claims

| Place of search | Date of completion of the search | Examiner |
|---|---|---|
| THE HAGUE | 29-05-1985 | FLETCHER A.S. |